# EUROPEAN PATENT SPECIFICATION

(11) **EP 4 361 546 B1**
(45) Date of publication and mention of the grant of the patent: **10.12.2025**
(21) Application number: 22732378.9
(22) Date of filing: 17.06.2022
(51) Int. Cl.: F27B 14/06, F27B 14/08, F27B 14/10, F27B 14/14, G21F 9/14, C03B 5/00, C03B 5/02, C03B 19/09, F27B 14/20, G21F 9/16, G21F 9/30

(54) **POWER CONTROL METHOD FOR POWER SUPPLY OF WASTE TREATMENT SYSTEM**
LEISTUNGSSTEUERUNGSVERFAHREN ZUR STROMVERSORGUNG EINES ABFALLBEHANDLUNGSSYSTEMS
PROCÉDÉ DE COMMANDE DE PUISSANCE POUR ALIMENTATION ÉLECTRIQUE DE SYSTÈME DE TRAITEMENT DE DÉCHETS

(30) Priority: 21.06.2021 CN 202110684847
(43) Date of publication of application: 01.05.2024
(73) Proprietor: China Institute of Atomic Energy, Beijing 102413 (CN)
(72) Inventor: ZHANG, Shengdong, Beijing 1024113 (CN); QIE, Dongsheng, Beijing 1024113 (CN); ZHU, Dongdong, Beijing 1024113 (CN); XIAN, Liang, Beijing 1024113 (CN); LIU, Lijun, Beijing 1024113 (CN); LI, Yusong, Beijing 1024113 (CN); ZHOU, Hui, Beijing 1024113 (CN)
(74) Representative: Stiel, Jürgen
(86) International application number: PCT/CN2022/099631
(87) International publication number: WO 2022/268001

(56) References cited:
- CA-A1- 2 792 404
- CN-A- 105 474 326
- CN-A- 107 606 946
- CN-A- 109 734 286
- CN-A- 113 465 378
- GB-A- 1 239 710
- GB-A- 1 239 710
- US-B1- 6 225 519

## Description

### TECHNICAL FIELD

The present disclosure relates to a field of a radioactive waste treatment technology, and in particular, to a method for controlling a power of a power supply of a waste treating system.

### BACKGROUND

At present, in a field of a nuclear industry, a cold-crucible vitrification technology has become a relatively advanced process for treating a radioactive waste at home and abroad due to its advantages of high treatment temperature, wide range of waste types, long service life of furnaces and easy decommissioning. Due to a limited volume of a cold crucible body, when treating a radioactive waste mainly existing in a liquid state (i.e., a radioactive waste liquid), a calciner (such as a rotary calciner) may be equipped to pretreat the radioactive waste liquid in advance. This method is known as a two-step cold-crucible vitrification technology. A main device for the two-step cold-crucible vitrification technology includes a calciner and a cold crucible.

The calciner is generally a rotary calciner, which includes a bracket, a furnace tube rotatably arranged on the bracket, a heating component for heating the furnace tube, a feeding tube in communication with a first end of the furnace tube and a discharge tube in communication with a second end of the furnace tube. The furnace tube is rotatable along its own axis. The radioactive waste liquid and other additives may enter the furnace tube through the feeding tube, and the furnace tube may be heated by the heating component. At the same time, the furnace tube may rotate along its own axis, and the radioactive waste liquid is gradually calcined and transformed into a solid powder material.

The cold crucible may use a power supply to generate a high frequency (105-106Hz) current, which is then converted into an electromagnetic current by an induction coil and penetrates into a material to be treated, then an eddy current is formed to generate heat to directly heat and melt the material to be treated. The cold crucible mainly includes a cold crucible body and a melting heating structure. The cold crucible body is a container including a metal arc block or tube that passes through cooling water (a shape of the container is mainly circular or oval). The melting heating structure includes an induction coil wound outside the cold crucible body and a high frequency induction power supply electrically connected to the induction coil. After the material to be treated is placed in the cold crucible body, the high frequency induction power supply may be turned on to energize the induction coil. A current may be converted into an electromagnetic current by the induction coil and enter the material to be treated through a wall of the cold crucible body, then an eddy current is formed inside the material to be treated to generate heat, so as to heat the material to be treated. When the cold crucible operates, cooling water is continuously fed into the metal arc block or tube. A melted material in the cold crucible body has a high temperature generally up to 2000 °C, but the wall of the cold crucible body still maintains a low temperature generally less than 200 °C, so that the melted material forms a layer of solid (cold wall) with a thickness of 2-3 cm in a low temperature zone near the wall of the cold crucible body, and is thus called "cold" crucible. Patent documents CA 2 792 404 A1 and GB 1 239 710 A further disclose a method for controlling power supply of a waste treating system.

### SUMMARY

The present disclosure provides a system for treating a radioactive waste, including a calcining device and a melting system, wherein the melting system includes a crucible and a power supply, the calcining device is configured to receive a radioactive waste and calcine and transform the radioactive waste to obtain a material, the crucible is configured to receive the obtained material and a glass base material and melt the obtained material and the glass base material to form a molten glass, and the power supply is configured to supply an electrical energy to the crucible.

Optionally, the system further includes a power switching device, wherein the power switching device includes: a support member configured to support at least two power supplies; and a driving member configured to drive the support member to move, so as to adjust positions of the at least two power supplies, wherein any one of the power supplies has a position corresponding to the crucible through a movement of the support member, and the power supply in the position corresponding to the crucible is configured to supply an electrical energy to the crucible.

Optionally, the system further includes a connecting assembly, wherein the power supply is electrically connected to a power supply connecting part provided with a first opening, the crucible is electrically connected to a crucible connecting part provided with a second opening, and the connecting assembly includes: a connector passing through the first opening and the second opening, wherein the connector has a first end protruding from a side of the first opening away from the second opening and a second end protruding from a side of the second opening away from the first opening; at least one eccentric wheel, wherein each of the at least one eccentric wheel (420) is rotatably connected to one of the first end and the second end, a rotation of each of the at least one eccentric wheel together with the other one of the first end and the second end allows a detachable connection between the power supply connecting part and the crucible connecting part, and a connection between the power supply connecting part and the crucible connecting part allows a transfer of the electrical energy of the power supply to the crucible.

Optionally, the system further includes a crucible connecting device for an accommodating device, wherein the accommodating device includes an accommodating member and a partition member, the partition member divides an inner space defined by the accommodating member into a first subspace for accommodating the power supply and a second subspace for accommodating the crucible, and the partition member is provided with an opening for connecting the first subspace and the second subspace, wherein the crucible connecting device includes: a mounting member mounted at the opening to close the opening, the mounting member is provided with a mounting hole having a plurality of hole sections with different extension directions; and a connector partially passing through the mounting hole to allow an electrical connection between the power supply and the crucible, so that the electrical energy of the power supply is transferred through the connector to the crucible to enable the crucible to heat the radioactive material.

The present disclosure further provides a method for controlling a power of the power supply of the system for treating a radioactive waste, wherein the crucible is a cold crucible, the method including: controlling the power supply of an induction coil of the cold crucible to be turned on at an initial power, wherein the induction coil generates an electromagnetic field in the cold crucible after the power supply is turned on, so that a glass in the cold crucible begins to melt; controlling the power of the power supply to be increased to a first predetermined power after the power supply is controlled to operate at the initial power to a first predetermined time; controlling the power of the power supply to be reduced to a second predetermined power after the power supply is controlled to operate at the first predetermined power to a second predetermined time; and controlling the power supply to operate at the second predetermined power until the glass is completely melted.

The present disclosure further provides a method for controlling a power of the power supply of the system for treating a radioactive waste, wherein the crucible is a cold crucible, the method including: controlling the power supply of an induction coil of the cold crucible to be turned on at a preset power, wherein the induction coil generates an electromagnetic field in the cold crucible after the power supply is turned on, so that a glass in the cold crucible begins to melt; controlling the power supply to operate at the preset power until the glass is completely melted.

### BRIEF DESCRIPTION OF THE DRAWINGS

With following description of the present disclosure with reference to the drawings, other objectives and advantages of the present disclosure will be obvious and the present disclosure will be understood comprehensively.
FIG. 1 shows a schematic diagram of a first state of a power switching device according to a first embodiment of the present disclosure.
FIG. 2 shows a schematic diagram of a second state of the power switching device according to the first embodiment of the present disclosure.
FIG. 3 shows a schematic diagram of a first state of a power switching apparatus according to the first embodiment of the present disclosure.
FIG. 4 shows a schematic diagram of a second state of the power switching apparatus according to the first embodiment of the present disclosure.
FIG. 5 shows a top view of the power switching apparatus shown in FIG. 3.
FIG. 6 shows a schematic structural diagram of a power supply according to a second embodiment of the present disclosure.
FIG. 7 shows a schematic structural diagram of a crucible according to the second embodiment of the present disclosure.
FIG. 8 shows a cross-sectional view of a connecting assembly, a power supply connecting part and a crucible connecting part according to the second embodiment of the present disclosure in a first state.
FIG. 9 shows a cross-sectional view of the connecting assembly, the power supply connecting part and the crucible connecting part according to the second embodiment of the present disclosure in a second state.
FIG. 10 shows a schematic structural diagram of the connecting assembly according to the second embodiment of the present disclosure.
FIG. 11 shows a schematic structural diagram of an accommodating device according to a third embodiment of the present disclosure.
FIG. 12 shows an assembly diagram of an accommodating device, a power supply, a crucible and a crucible connection device according to the third embodiment of the present disclosure.
FIG. 13 shows a schematic structural diagram of the crucible connection device according to the third embodiment of the present disclosure.
FIG. 14 shows a cross-sectional view of a mounting member according to the third embodiment of the present disclosure.
FIG. 15 shows a cross-sectional view of another mounting member according to the third embodiment of the present disclosure.
FIG. 16 shows a schematic structural diagram of a cold crucible according to a fourth embodiment of the present disclosure.
FIG. 17 shows a flowchart of a method for controlling a power according to the fourth embodiment of the present disclosure.
FIG. 18 shows a first schematic diagram of a power variation with time according to the fourth embodiment of the present disclosure.
FIG. 19 shows a second schematic diagram of a power variation with time according to the fourth embodiment of the present disclosure.
FIG. 20 shows a third schematic diagram of a power variation with time according to the fourth embodiment of the present disclosure.
FIG. 21 shows a fourth schematic diagram of a power variation with time according to the fourth embodiment of the present disclosure.
FIG. 22 shows a fifth schematic diagram of a power variation with time according to the fourth embodiment of the present disclosure.
FIG. 23 shows a flowchart of a method for controlling a power according to a fifth embodiment of the present disclosure.

It should be noted that the accompanying drawings are not necessarily drawn to scale, but are only shown in a schematic manner that does not affect the reader's understanding.

### DETAILED DESCRIPTION OF EMBODIMENTS

In order to make the objectives, technical solutions and advantages of the present disclosure clearer, the technical solutions of the present disclosure are clearly and completely described below with reference to the drawings of the embodiments of the present disclosure. Obviously, the described embodiments are only a part but not all of the embodiments of the present disclosure.

It should be noted that, unless otherwise defined, technical terms or scientific terms used in the present disclosure shall be of the general meaning understood by the ordinary skilled in the art.

The embodiments of the present disclosure provide a system for treating a radioactive waste, including a calcining device and a melting system. The melting system includes a crucible 300 and a power supply 200. The radioactive waste enters the calcining device for calcination and transformation to obtain a material, and the obtained material together with a glass base material enters the crucible 300 and is melted to form a molten glass. The power supply 200 is used to supply an electrical energy to the crucible 300.

### First Embodiment

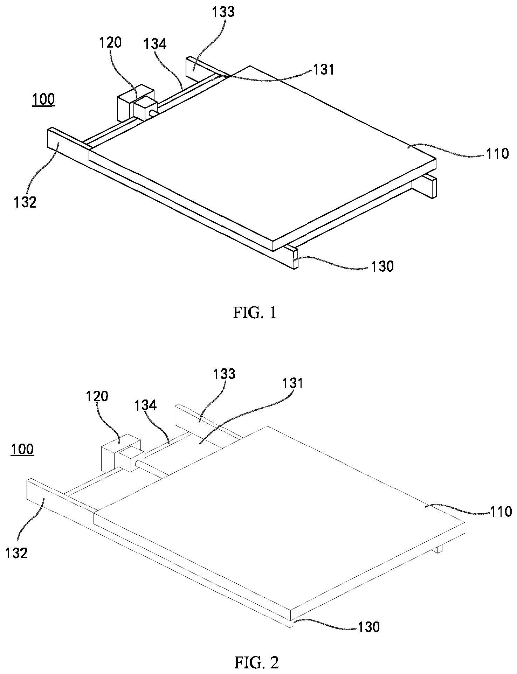

The system for treating a radioactive waste further includes a power switching device 100. FIG. 1 shows a schematic diagram of a first state of the power switching device 100 according to the first embodiment of the present disclosure. FIG. 2 shows a schematic diagram of a second state of the power switching device 100 according to the first embodiment of the present disclosure. As shown in FIG. 1 and FIG. 2, the first state and the second state indicate that a support member 110 is in different position states.

It may be understood that the crucible may be a cold crucible. The cold crucible uses a power supply to generate a high-frequency current, which is then converted into an electromagnetic current through an induction coil (which may be a high-frequency induction coil) and penetrates into a material to be heated to form an eddy current to generate heat, so as to directly heat and melt the material. A cavity of the cold crucible is a container including a metal arc-shaped block or tube fed with cooling water. A shape of the container is mainly circular or oval. When the cold crucible operates, the cooling water is continuously passed through the metal tube, and a temperature of a melt in the cold crucible may reach 2000 °C or more, but a wall surface of the cavity still maintains a low temperature (generally less than 200 °C), so that the material forms a low temperature area on an inner wall during operation to form a solid shell. The cold crucible does not need a refractory material and does not need to be heated by electrodes. The formed solid shell may reduce a corrosive effect of the material on the cold crucible, prolong a service life of the cold crucible, and enable the cold crucible to process a corrosive material. A discharge port of the cold crucible may be located at a bottom of a heating cavity.

When the cold crucible operates, an alternating current is passed through the induction coil, and an alternating electromagnetic field is generated in and around the induction coil. Since the metal tubes of the cold crucible are insulated from each other, an induced current is generated in each tube, and current directions on cross-sections of two adjacent tubes are opposite, and magnetic fields established between the tubes are in the same direction, thereby exhibiting a magnetic field enhancement effect. Therefore, a strong magnetic field is generated at each gap of the cold crucible. The cold crucible, like a strong current device, gathers magnetic lines of force on the material in the crucible. Then, the material in the crucible is cut by the magnetic lines of the alternating magnetic field, and an induced electromotive force is generated in the material in the crucible. Due to the existence of the induced electromotive force, a closed current loop may be formed in a thin layer of a melt surface of the material, and a large amount of heat generated by an eddy current loop may melt the material.

The cold crucible may be used in a two-step vitrification process. In the two-step vitrification process, the radioactive material to be treated is first pretreated in the rotary calciner and transformed into a slurry or solid powder, and then the pretreated material together with a glass base material is added into the cold crucible and melted into a glass in the cold crucible, thereby avoiding a harm of a radioactive substance to an environment.

A heat transfer process of the rotary calciner mainly includes three parts respectively inside the furnace, on a furnace wall and outside the furnace. The rotary furnace may be divided into several zones in which a temperature gradually increases. The material may last for a long time in a high-temperature state in the furnace, with a high degree of gas turbulence, a good mixing effect and a good contact of gas and solid, which is beneficial to the calcination of material. No moving mechanical components are provided in the furnace, which is beneficial to a stable operation and a convenient control, so that the material may be continuously discharged and a secondary waste is produced less. Further, an oxide after calcination has a large specific surface area, which is beneficial to a subsequent solidification treatment.

As shown in FIG. 1 and FIG. 2, the power switching device 100 includes a support member 110 and a driving member 120. The support member 110 is used to support at least two power supplies 200. The driving member 120 is used to drive the support member 110 to move, so as to adjust positions of the at least two power supplies 200. Any one of the power supplies 200 has a position corresponding to the crucible 300 through a movement of the support member 110. The power supply 200 at the position corresponding to the crucible 300 is used to provide an electrical energy to the crucible 300.

It may be understood that only when the power supply 200 in the position corresponding to the crucible 300 may provide an electrical energy to the crucible 300. The power switching device 100 provided by the embodiments of the present disclosure may quickly switch the power supply when the power supply to the crucible 300 fails, so that another power supply 200 may provide electrical energy to the crucible 300, so that a process of heating the material by the crucible 300 may not be seriously affected.

In some embodiments of the present disclosure, the power supply 200 may be a high-frequency power supply, and the crucible may be a cold crucible. It may be understood that the high-frequency power supply may a provide high-frequency energy for heating a glass solidified material in the cold crucible furnace. A failure of the high-frequency power supply may lead to a rapid cooling and solidification of the high-temperature glass melt in the water-cooled crucible furnace. In order to ensure the supply of high-frequency energy, in the embodiments of the present disclosure, two high-frequency power supplies are used as hot standby for each other, so as to ensure a continuous and stable operation of the cold crucible furnace. The power switching device 100 may achieve a fast switching from two high-frequency power supplies to one bus output.

In some embodiments of the present disclosure, the power switching device 100 may further include a mounting member 130 used to mount the support member 110 and the driving member 120, and the driving member 120 is used to drive the support member 110 to move relative to the mounting member 130. Therefore, the entire power switching device 100 is easy to install, transport, etc., thereby improving a user experience.

In some embodiments of the present disclosure, each of the power supplies 200 has a first end close to the crucible 300. The first end of the power supply 200 at the position corresponding to the crucible 300 is electrically connected to the crucible 300 to provide the electrical energy. Therefore, a length and complexity of wiring between the power supply 200 and the crucible 300 are reduced, thereby improving the user experience.

In some embodiments of the present disclosure, each of the power supplies 200 further has a second end away from the crucible 300. A distance between the first ends of at least two adjacent power supplies 200 is less than a distance between the second ends.

Therefore, when switching the power supply 200 supplying power to the crucible 300, the driving member 120 only needs to drive the support member 110 to move a small stroke. Moreover, a larger distance between the second ends provides a larger space for repairing the power supply 200, which is convenient for a maintainer to perform an operation of repairing the power supply 200.

In some embodiments of the present disclosure, the mounting member 130 includes a bottom plate 131, a first side plate 132 and a second side plate 133.

The first side plate 132 extends upward from an edge of the bottom plate 131 close to the crucible 300. The second side plate 133 extends upward from an edge of the bottom plate 131 away from the crucible 300. The first side plate 132 and the second side plate 133 are used to limit a moving direction of the support member 110. That is to say, the first side plate 132 and the second side plate 133 may guide the support member 110 to prevent the support member 110 from deviating from a moving track.

In some embodiments of the present disclosure, the bottom plate 131 includes a first edge and a second edge. An arrangement direction of the first edge and the second edge is perpendicular to that of the first side plate 132 and the second side plate 133. The mounting member 130 may further include a mounting plate 134 extending upward from one of the first edge and the second edge, for mounting the driving member 120. The mounting plate 134 is connected to the first side plate 132 and the second side plate 133, so as to improve a structural strength of the entire power switching device 100.

The mounting member 130 may further include a stopper plate extending upward from the other one of the first edge and the second edge, for limiting a moving distance of the support member 110 in the arrangement direction of the first edge and the second edge, so as to prevent the support member from deviating from the moving track.

The support member 110 may be mounted on the mounting member 130 by being supported on the first side plate 132 and the second side plate 133. Thus, an installation and processing of the power switching device 100 is simplified.

In some embodiments of the present disclosure, at least one of the power supplies 200 has a portion located directly above the first side plate 132 and/or the second side plate 133, so as to ensure a supporting effect on the power supply 200.

At least one of the power supplies 200 includes at least one anti-skid pad arranged on the bottom of the power supply 200 to reduce a sliding friction between the power supply 200 and the support member 110. That is, the anti-skid pad may reduce the sliding between the power supply 200 and the support member 110.

Each power supply 200 may include a rectifier cabinet and an inverter cabinet, which are connected by a flexible cable. An end of the inverter cabinet outputs a high-frequency current by means of water-cooled copper bars. Main and standby inverter cabinets are fixed on the support member 110, and the power supply for supplying the electrical energy to the crucible 300 is switched through the movement of the support member 110.

In some embodiments, a quick installation or removal of the power supply 200 to or from the crucible 300 may be achieved through a connecting assembly. The power supply 200 is electrically connected to a power supply connecting part with a first opening, and the crucible 300 is electrically connected to a power receiving connecting part with a second opening. The connecting assembly includes a connector and at least one eccentric wheel. The connector passes through the first opening and the second opening, and has a first end protruding from a side of the first opening away from the second opening and a second end protruding from a side of the second opening away from the first opening. Each of the at least one eccentric wheel is rotatably connected to one of the first end and the second end, a rotation of each eccentric wheel in conjunction with the other of the first end and the second end may achieve a detachable connection between the power supply connecting part and the power receiving connecting part, and the connection between the power supply connecting part and the power receiving connecting part is used to achieve a transfer of the electrical energy from the power supply 200 to the crucible 300. One of the first end and the second end of the connecting assembly that is rotatably connected to each eccentric wheel is provided with a fixing hole. The connecting assembly may further include a rotating shaft fixed in the fixing hole and rotatably connected to each eccentric wheel, so as to achieve a rotating connection between each eccentric wheel and one of the first end and the second end. The at least one eccentric wheel may be a plurality of eccentric wheels extending in an axial direction of the rotating shaft. The connecting assembly may further include a first fixing member and a force-bearing structure. The first fixing member is fixedly connected to each of the eccentric wheels, and the force-bearing structure is fixedly connected to the first fixing member and used to receive an external force for rotating the first fixing member. A rotation of the first fixing member is used to achieve the rotation of each of the eccentric wheels. In some embodiments, the force-bearing structure is detachably and fixedly connected to the first fixing member. The rotating shaft is provided with a limiting part for restricting a movement of at least one of the eccentric wheels in the axial direction of the rotating shaft. The connecting assembly may further include at least one second fixing member, each of which is fixedly connected to the rotating shaft and one of the power supply connecting part and the power receiving connecting part that is close to the rotating shaft.

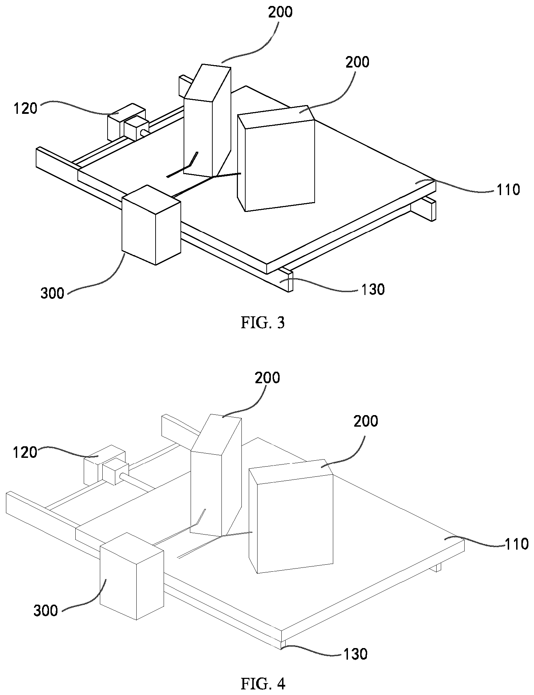

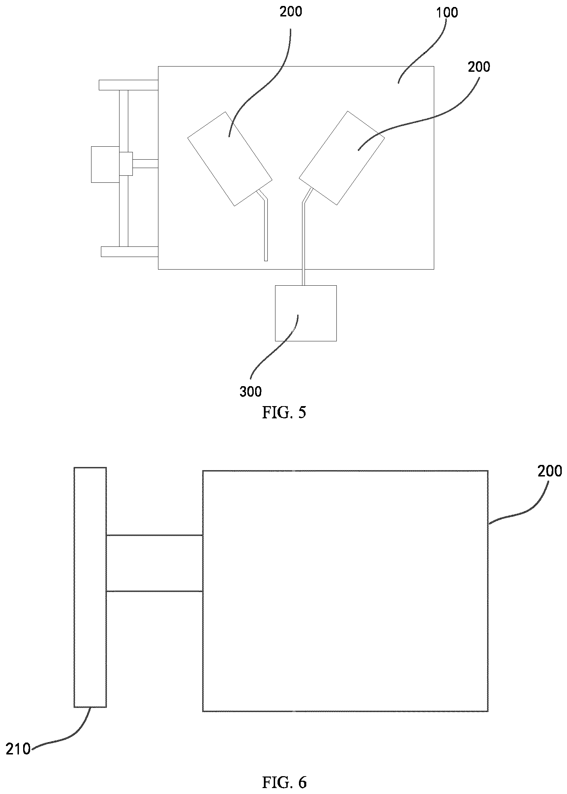

The first embodiment of the present disclosure further provides a power switching apparatus. FIG. 3 shows a schematic diagram of a first state of the power switching apparatus according to the first embodiment of the present disclosure. FIG. 4 shows a schematic diagram of a second first state of the power switching apparatus according to the first embodiment of the present disclosure. FIG. 5 shows a top view of the power switching apparatus shown in FIG. 3. As shown in FIG. 3, FIG. 4 and FIG. 5, the first state and the second state indicate that the support member 110 is in different position states.

The power switching apparatus includes any one of the power switching devices 100 described above, at least two power supplies 200 and a crucible 300. The at least two power supplies 200 are supported by the support member 110 of the power supply switching device 100, and the crucible 300 receives an electrical energy from the power supply 200 at the position corresponding to the crucible 300. For other related contents of the power switching device 100, the at least two power supplies 200 and the crucible 300, reference may be made to the foregoing embodiments, which will not be repeated here.

It may be understood that only the power supply 200 in the position corresponding to the crucible 300 may provide the electrical energy to the crucible 300. The power switching apparatus provided by the embodiments of the present disclosure may quickly switch the power supply when the power supply to the crucible 300 fails, so that another power supply 200 may provide the electrical energy to the crucible 300, so that the process of heating the material by the crucible 300 may not be seriously affected.

### Second Embodiment

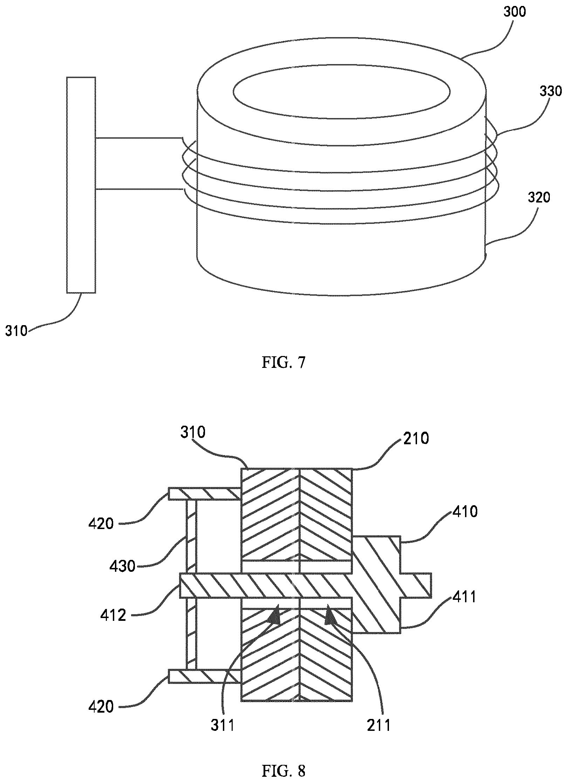

The radioactive waste treatment system further includes a connecting assembly 400. The power supply 200 is electrically connected to a power supply connecting part 210 provided with a first opening 211, and the crucible 300 is electrically connected to a crucible connecting part 310 provided with a second opening 311. FIG. 6 shows a schematic structural diagram of a power supply 200 according to the second embodiment of the present disclosure. FIG. 7 shows a schematic structural diagram of a crucible 300 according to the second embodiment of the present disclosure.

The connecting assembly 400 includes a connector 410 and at least one eccentric wheel 420. The connector 410 passes through the first opening 211 and the second opening 311, and has a first end 411 protruding from a side of the first opening 211 away from the second opening 311 and a second end 411 protruding from a side of the second opening 311 away from the first opening 211. Each of the at least one eccentric wheel 420 is rotatably connected to one of the first end 411 and the second end 412, a rotation of each eccentric wheel 420 in conjunction with the other of the first end 411 and the second end 412 may achieve a detachable connection between the power supply connecting part 210 and the crucible connecting part 310, and the connection between the power supply connecting part 210 and the crucible connecting part 310 is used to achieve a transfer of the electrical energy from the power supply 200 to the crucible 300.

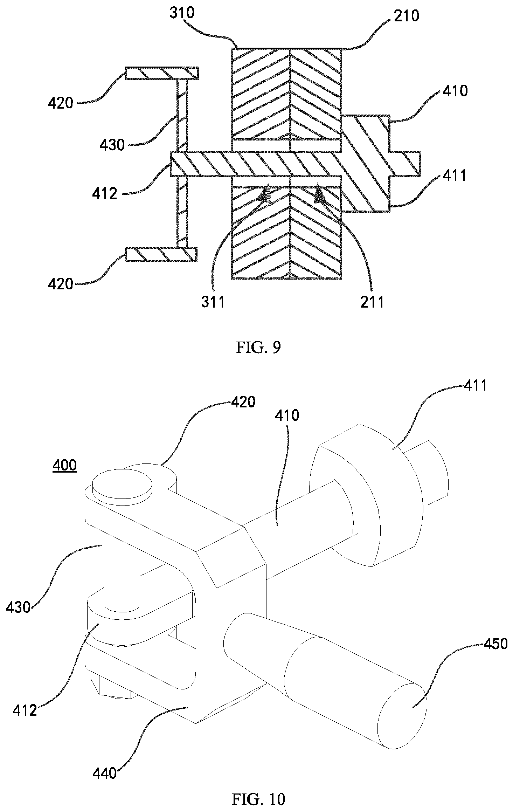

FIG. 8 shows a cross-sectional view of the connecting assembly 400, the power supply connecting part 210 and the crucible connecting part 310 according to the second embodiment of the present disclosure in a first state. FIG. 9 shows a cross-sectional view of the connecting assembly 400, the power supply connecting part 210 and the crucible connecting part 310 according to the second embodiment of the present disclosure in a second state. FIG. 10 shows a schematic structural diagram of the connecting assembly 400 according to the second embodiment of the present disclosure.

It may be understood that the eccentric wheel 420 has an end away from its rotation center and an end close to its rotation center. When it is rotated so that the end away from the rotation center is closer to the power supply connecting part 210 and the crucible connecting part 310, the power supply connecting part 210 is connected to the crucible connecting part 310, that is, the first state in FIG. 8. When it is rotated so that the end close to the rotation center is closer to the power supply connecting part 210 and the crucible connecting part 310, the power supply connecting part 210 and the crucible connecting part 310 are detachable, that is, in the second state in FIG. 9.

If the power supply 200 fails and the power supply 200 needs to be switched, the power supply connecting part 210 may be disconnected from the crucible connecting part 310 by rotating the eccentric wheel 420, so that the power supply 200 may be replaced to ensure a normal operation of the crucible 300. In this way, the power supply 200 of the crucible 300 may be switched conveniently.

It may be understood that the crucible may be a cold crucible. The cold crucible uses a power supply to generate a high-frequency current, which is then converted into an electromagnetic current through an induction coil (which may be a high-frequency induction coil) and penetrates into a material to be heated to form an eddy current to generate heat, so as to directly heat and melt the material. A cavity of the cold crucible is a container including a metal arc-shaped block or tube fed with cooling water. A shape of the container is mainly circular or oval. When the cold crucible operates, the cooling water is continuously passed through the metal tube, and a temperature of a melt in the cold crucible may reach 2000 °C or more, but a wall surface of the cavity still maintains a low temperature (generally less than 200 °C), so that the material forms a low temperature area on an inner wall during operation to form a solid shell. The cold crucible does not need a refractory material and does not need to be heated by electrodes. The formed solid shell may reduce a corrosive effect of the material on the cold crucible, prolong a service life of the cold crucible, and enable the cold crucible to process a corrosive material. A discharge port of the cold crucible may be located at a bottom of a heating cavity.

When the cold crucible operates, an alternating current is passed through the induction coil, and an alternating electromagnetic field is generated in and around the induction coil. Since the metal tubes of the cold crucible are insulated from each other, an induced current is generated in each tube, and current directions on cross-sections of two adjacent tubes are opposite, and magnetic fields established between the tubes are in the same direction, thereby exhibiting a magnetic field enhancement effect. Therefore, a strong magnetic field is generated at each gap of the cold crucible. The cold crucible, like a strong current device, gathers magnetic lines of force on the material in the crucible. Then, the material in the crucible is cut by the magnetic lines of the alternating magnetic field, and an induced electromotive force is generated in the material in the crucible. Due to the existence of the induced electromotive force, a closed current loop may be formed in a thin layer of a melt surface of the material, and a large amount of heat generated by an eddy current loop may melt the material.

The cold crucible may be used in a two-step vitrification process. In the two-step vitrification process, the radioactive material to be treated is first pretreated in the rotary calciner and transformed into a slurry or solid powder, and then the pretreated material together with a glass base material is added into the cold crucible and melted into a glass in the cold crucible, thereby avoiding a harm of a radioactive substance to an environment.

A heat transfer process of the rotary calciner mainly includes three parts respectively inside the furnace, on a furnace wall and outside the furnace. The rotary furnace may be divided into several zones in which a temperature gradually increases. The material may last for a long time in a high-temperature state in the furnace, with a high degree of gas turbulence, a good mixing effect and a good contact of gas and solid, which is beneficial to the calcination of material. No moving mechanical components are provided in the furnace, which is beneficial to a stable operation and a convenient control, so that the material may be continuously discharged and a secondary waste is produced less. Further, an oxide after calcination has a large specific surface area, which is beneficial to a subsequent solidification treatment.

In some embodiments of the present disclosure, one of the first end 411 and the second end 412 that is rotatably connected to each eccentric wheel 420 is provided with a fixing hole. The connecting assembly 400 further includes a rotating shaft 430 fixed in the fixing hole and rotatably connected to each eccentric wheel 420, so as to achieve a rotating connection between each eccentric wheel 420 and one of the first end 411 and the second end 412.

In some embodiments of the present disclosure, the at least one eccentric wheel 420 may include a plurality of eccentric wheels 420 extending along an axial direction of the rotating shaft 430. Therefore, when the power supply connecting part 210 is connected to the crucible connecting part 310, a connection effect may be improved.

In some embodiments of the present disclosure, the connecting assembly 400 further includes a first fixing member 440 and a force-bearing structure 450. The first fixing member 440 is fixedly connected to each eccentric wheel 420, and the force-bearing structure 450 is fixedly connected to the first fixing member 440 and used to receive an external force for rotating the first fixing member 440. A rotation of the first fixing member 440 is used to achieve the rotation of each eccentric wheel 420.

Specifically, the fixing member 440 may be a fixing rod, and the force-bearing structure 450 may be a handle, a wristband, or the like, which is convenient for the user to exert force and improve a user experience.

In some embodiments of the present disclosure, the force-bearing structure 450 is detachably and fixedly connected to the first fixing member 440, which may facilitate maintenance and replacement of the force-receiving structure.

In some embodiments of the present disclosure, the rotating shaft 430 is provided with a limiting part for restricting a movement of at least one eccentric wheel 420 in the axial direction of the rotating shaft 430. Specifically, the limiting part may be a limiting protrusion or groove, so as to prevent the eccentric wheel 420 from being separated from the rotating shaft 430.

The connecting assembly 400 may further include at least one second fixing member, each of which is fixedly connected to the rotating shaft 430 and one of the power supply connecting part 210 and the crucible connecting part 310 that is close to the rotating shaft, thereby strengthening the fixation of the rotating shaft 430.

In some embodiments of the present disclosure, the at least one second fixing member may include a plurality of second fixing members that are fixedly connected to different areas in the axial direction of the rotating shaft 430, so as to ensure a fixing effect on different areas of the rotating shaft 430. The plurality of second fixing members may be evenly arranged at equal intervals, so as to avoid a too low connection strength of a certain area in a case of a constant number of the second fixing members.

The first opening 211 has a first aperture and a second aperture arranged in an arrangement direction of the first opening 211 and the second opening 311. The second opening 311 has a third aperture and a fourth aperture arranged in the arrangement direction of the first opening 211 and the second opening 311. The first opening 211 further has a fifth aperture connected to a part of the first aperture and a part of the second aperture, the second opening 311 further has a sixth aperture connected to a part of the third aperture and a part of the fourth aperture, and a position of the fifth aperture corresponds to a position of the sixth aperture, so as to provide a channel for the connector 410 to disengage from the first opening 211 and the second opening 311. In this way, the connecting assembly 400, the power supply connecting part 210 and the crucible connecting part 310 may be easily installed and removed.

The embodiments of the present disclosure further provides a crucible system, including the power supply 200, the crucible 300 and any one of the above-mentioned connection assemblies 400.

The power supply 200 is electrically connected to the power supply connecting part 210 provided with the first opening 211, and the crucible 300 is electrically connected to the crucible connecting part 310 provided with the second opening 311. The connecting assembly 400 is used to achieve a detachable connection between the power supply connecting part 210 and the crucible connecting part 310, and the connection between the power supply connecting part 210 and the crucible connecting part 310 is used to achieve the transfer of the electrical energy of the power supply 200 to the crucible 300. For other related contents of the power supply 200, the crucible 300 and the connecting assembly 400, reference may be made to the foregoing embodiments, and details are not repeated here.

The crucible 300 may include a cavity 320 and an inductor 330. The cavity 320 defines a heating cavity for heating the material. The inductor 330 surrounds the heating cavity, and is configured to receive the electrical energy from the power supply 200 when the power supply connecting part 210 is connected to the crucible connecting part 310, so as to generate a magnetic field for heating the material in the heating cavity.

If the power supply 200 fails and the power supply 200 needs to be switched, the power supply connecting part 210 may be disconnected from the crucible connecting part 310 by rotating the eccentric wheel 420, so that the power supply 200 may be replaced to ensure a normal operation of the crucible 300. In this way, the power supply 200 of the crucible 300 may be switched conveniently.

### Third Embodiment

The embodiments of the present disclosure firstly provide a crucible connecting device 600 for an accommodating device 500. The accommodating device 500 includes an accommodating member 510 and a partition member 520. The partition member 520 divides an inner space defined by the accommodating member 510 into a first subspace 511 for accommodating the power supply 200 and a second subspace 512 for accommodating the crucible 30, and the partition member 520 is provided with an opening 521 for connecting the first subspace 511 and the second subspace 512.

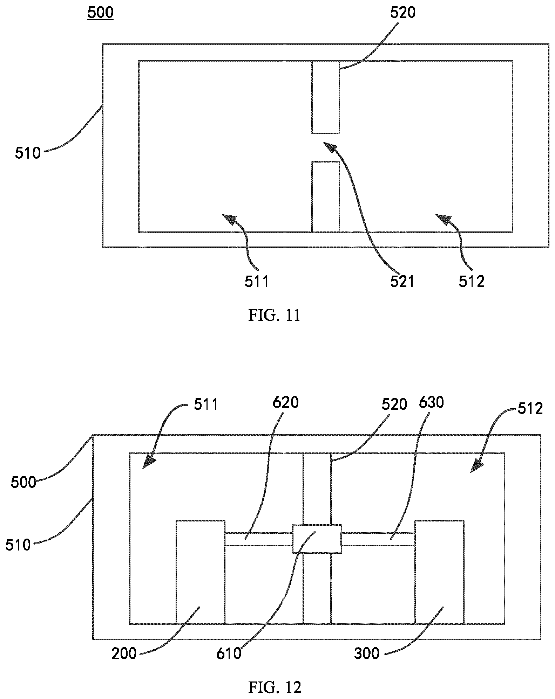

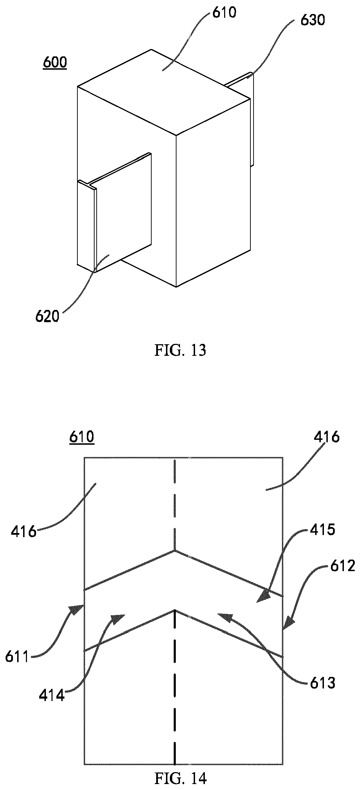

FIG. 11 shows a schematic structural diagram of the accommodating device 500 according to the third embodiment of the present disclosure. FIG. 12 shows an assembly diagram of the accommodating device 500, the power supply 200, the crucible 300 and the crucible connecting device 600 according to the third embodiment of the present disclosure. FIG. 13 shows a schematic structural diagram of the crucible connecting device 600 according to the third embodiment of the present disclosure.

The accommodating member 510 and the partition member 520 may be made of a material capable of shielding a radioactive substance, such as cement, concrete, etc., so as to prevent the radioactive substance from entering the space corresponding to the power supply 200 when the crucible 300 heats the radioactive substance. It may be understood that during the operation of the crucible 300, an operator may be required to operate the power supply, for example, to perform various operations such as control, adjustment, maintenance, switching, etc. If the radioactive substance enters the space corresponding to the power supply 200, it may threaten a life safety of the operator.

The crucible connecting device 600 includes a mounting member 610 and a connector. The mounting member 610 is mounted at the opening 521 to close the opening 521. The mounting member 610 is provided with a mounting hole 613 having a plurality of hole sections with different extension directions. The connector partially passes through the mounting hole 613 to achieve an electrical connection between the power supply 200 and the crucible 30, so that the electrical energy of the power supply 200 is transferred to the crucible 300 through the connector to enable the crucible 300 to heat the radioactive material.

The crucible connecting device 600 provided by the embodiment of the present disclosure may not only achieve the electrical connection between the power supply 200 and the crucible 30, but also prevent the radioactive substance from entering the space corresponding to the power supply 200 by using the plurality of hole sections with different extension directions. Moreover, the crucible connecting device 600 is easy to install, and the electrical connection between the power supply 200 and the crucible 300 in different spaces may be achieved conveniently.

It may be understood that the crucible 300 may be a cold crucible. The cold crucible uses a power supply to generate a high-frequency current, which is then converted into an electromagnetic current through an induction coil (which may be a high-frequency induction coil) and penetrates into a material to be heated to form an eddy current to generate heat, so as to directly heat and melt the material. A cavity of the cold crucible is a container including a metal arc-shaped block or tube fed with cooling water. A shape of the container is mainly circular or oval. When the cold crucible operates, the cooling water is continuously passed through the metal tube, and a temperature of a melt in the cold crucible may reach 2000 °C or more, but a wall surface of the cavity still maintains a low temperature (generally less than 200 °C), so that the material forms a low temperature area on an inner wall during operation to form a solid shell. The cold crucible does not need a refractory material and does not need to be heated by electrodes. The formed solid shell may reduce a corrosive effect of the material on the cold crucible, prolong a service life of the cold crucible, and enable the cold crucible to process a corrosive material. A discharge port of the cold crucible may be located at a bottom of a heating cavity 210.

When the cold crucible operates, an alternating current is passed through the induction coil, and an alternating electromagnetic field is generated in and around the induction coil. Since the metal tubes of the cold crucible are insulated from each other, an induced current is generated in each tube, and current directions on cross-sections of two adjacent tubes are opposite, and magnetic fields established between the tubes are in the same direction, thereby exhibiting a magnetic field enhancement effect. Therefore, a strong magnetic field is generated at each gap of the cold crucible. The cold crucible, like a strong current device, gathers magnetic lines of force on the material in the crucible. Then, the material in the crucible is cut by the magnetic lines of the alternating magnetic field, and an induced electromotive force is generated in the material in the crucible. Due to the existence of the induced electromotive force, a closed current loop may be formed in a thin layer of a melt surface of the material, and a large amount of heat generated by an eddy current loop may melt the material.

The cold crucible may be used in a two-step vitrification process. In the two-step vitrification process, the radioactive material to be treated is first pretreated in the rotary calciner and transformed into a slurry or solid powder, and then the pretreated material together with a glass base material is added into the cold crucible and melted into a glass in the cold crucible, thereby avoiding a harm of a radioactive substance to an environment.

A heat transfer process of the rotary calciner mainly includes three parts respectively inside the furnace, on a furnace wall and outside the furnace. The rotary furnace may be divided into several zones in which a temperature gradually increases. The material may last for a long time in a high-temperature state in the furnace, with a high degree of gas turbulence, a good mixing effect and a good contact of gas and solid, which is beneficial to the calcination of material. No moving mechanical components are provided in the furnace, which is beneficial to a stable operation and a convenient control, so that the material may be continuously discharged and a secondary waste is produced less. Further, an oxide after calcination has a large specific surface area, which is beneficial to a subsequent solidification treatment.

In some embodiments of the present disclosure, the connector may include a first sub-connector620, a second sub-connector 630 and a third sub-connector. The first sub-connector 620 is arranged at an end of the mounting member 610 facing the first sub-space 511 and is used for electrical connection with the power supply 200. The second sub-connector 630 is arranged at an end of the mounting member 610 facing the second subspace 512 and is used for electrical connection with the crucible 30. the third sub-connector passes through the mounting hole 613 and is electrically connected to the first sub-connector 620 and the second sub-connector 630. Such a connector has a simple structure, and it may be understood that the first sub-connector 620, the second sub-connector 630 and the third sub-connector may be integrally formed, thereby simplifying an assembly process.

The first sub-connector 620, the second sub-connector 630 and the third sub-connector may all be wires. The first sub-connector 620 may extend a certain length from the mounting member 610 toward one end of the first subspace 511, and the second sub-connector 630 may extend a certain length from the mounting member 610 toward one end of the second sub-space 512, so as to facilitate adjustment of the positions of the power supply 200 and the crucible 30, thereby improving the user experience.

The mounting hole 613 may have a first aperture 611 and a second aperture 612. The mounting hole 613 communicates with the first subspace 511 through the first aperture 611, and the mounting hole 613 communicates with the second subspace 512 through the second aperture 612. An arrangement direction of the first aperture 611 and the second aperture 612 is different from an arrangement direction of the first subspace 511 and the second subspace 512.

FIG. 14 shows a cross-sectional view of a mounting member according to the third embodiment of the present disclosure. As shown in FIG. 14, in some embodiments, the plurality of hole sections include a first hole section 414 having the first aperture 611 and a second hole section 415 having the second aperture 612. The hole section 414 is adjacent to the second hole section 415. In this way, while preventing the radioactive substance from entering the space corresponding to the power supply 200, the mounting member may have a relatively simple structure, which is convenient for manufacture and improves a manufacturing efficiency.

In some embodiments, an extension direction of the first hole section 414 is different from the arrangement direction of the first subspace 511 and the second subspace 512. In other embodiments, an extension direction of the second hole section 415 is different from the arrangement direction of the first subspace 511 and the second subspace 512. Therefore, the plurality of hole sections have a large overall length, and a path of the radioactive substance entering the area corresponding to the power supply 200 is extended, so as to prevent the radioactive substance from entering the area corresponding to the power supply 200.

As shown in FIG. 14, the mounting member 610 may include a plurality of sections 416 in one-to-one correspondence with the plurality of hole sections, and the plurality of sections 416 are spliced to form a mounting member 610. That is, one section 416 is formed with one hole section, which may facilitate machining of the plurality of hole sections. Furthermore, different numbers of sections 416 may be combined to adapt to partition members 520 of different thicknesses.

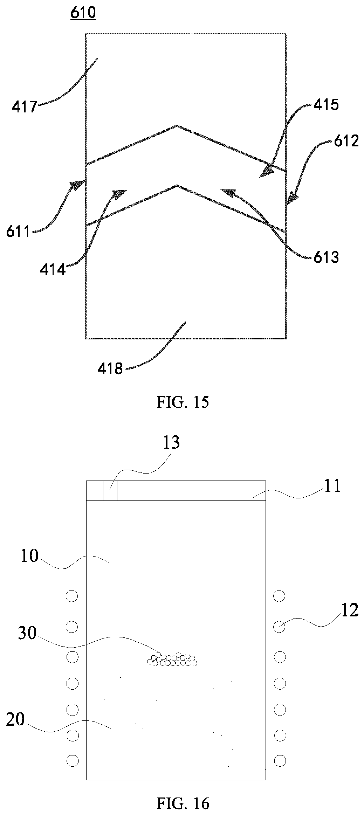

FIG. 15 shows a cross-sectional view of another mounting member according to the third embodiment of the present disclosure. As shown in FIG. 15, the mounting member 610 may include a first sub-mounting member 417 and a second sub-mounting member 418.

The first sub-mounting member 417 defines a first sub-mounting hole having a part of the first aperture 611 and a part of the second aperture 612. The second sub-mounting member 418 defines a second sub-mounting hole having the other part of the first aperture 611 and the other part of the second aperture 612. The first sub-mounting member 417 and the second sub-mounting member 418 are spliced to form the mounting member 610, and the first sub-mounting hole and the second sub-mounting hole are spliced to form the mounting hole 613, so as to facilitate the machining of the plurality of hole sections.

In some embodiments of the present disclosure, the crucible connecting device 600 may further include a sealing member arranged on the mounting member 610 at a position corresponding to the opening 521, so that the mounting member 610 has a sealing connection with the partition member 520 through the sealing member. The sealing member may further prevent the radioactive substance from entering the area corresponding to the power supply 200. Specifically, the sealing member may be a rubber gasket or the like.

The embodiments of the present disclosure further provide a material treatment apparatus for the accommodating device 500. The accommodating device 500 includes an accommodating member 510 and a partition member 520. The partition member 520 divides an inner space defined by the accommodating member 510 into a first subspace 511 and a second subspace 512, and the partition member 520 is provided with an opening 521 for connecting the first subspace 511 and the second subspace 512. The material treatment apparatus includes a power supply 200, a crucible 300 and any one of the crucible connecting devices 600 described above.

The power supply 200 is arranged in the first subspace 511, and the crucible 300 is arranged in the second subspace 512. The mounting member 610 of the crucible connecting device 600 is mounted at the opening 521 to close the opening 521. The connector of the crucible connecting device 600 is used to achieve the electrical connection between the power supply 200 and the crucible 30, so that the electrical energy of the power supply 200 is transferred to the crucible 300 through the connector to enable the crucible 300 to heat the radioactive material.

For other related contents of the accommodating device 500, the power supply 200 and the crucible 30, reference may be made to the foregoing embodiments, which will not be repeated here. The material treatment apparatus provided by the embodiments of the present disclosure may achieve the electrical connection between the power supply 200 and the crucible 30, and may also prevent the radioactive substance from entering the space corresponding to the power supply 200 by using the plurality of hole sections with different extension directions. In addition, the crucible connecting device 600 is easy to install, and the electrical connection between the power supply 200 and the crucible 300 in different spaces may be achieved conveniently.

The embodiments of the present disclosure further provide a material treatment system, including the accommodating device 500, the power supply 200, the crucible 300 and any one of the crucible connecting devices 600 described above.

The accommodating device 500 includes an accommodating member 510 and a partition member 520. The partition member 520 divides an inner space defined by the accommodating member 510 into a first subspace 511 and a second subspace 512, and the partition member 520 is provided with an opening 521 for connecting the first subspace 511 and the second subspace 512. The power supply 200 is arranged in the first subspace 511, and the crucible 300 is arranged in the second subspace 512. The mounting member 610 of the crucible connecting device 600 is mounted at the opening 521 to close the opening 521. The connector of the crucible connecting device 600 is used to achieve the electrical connection between the power supply 200 and the crucible 30, so that the electrical energy of the power supply 200 is transferred to the crucible 300 through the connector to enable the crucible 300 to heat the radioactive material.

For other related contents of the accommodating device 500, the power supply 200 and the crucible 30, reference may be made to the foregoing embodiments, which will not be repeated here. The material treatment system provided by the embodiments of the present disclosure may achieve the electrical connection between the power supply 200 and the crucible 30, and may also prevent the radioactive substance from entering the space corresponding to the power supply 200 by using the plurality of hole sections with different extension directions. In addition, the crucible connecting device 600 is easy to install, and the electrical connection between the power supply 200 and the crucible 300 in different spaces may be achieved conveniently.

### Fourth Embodiment

A method for controlling a power provided by the embodiment of the present disclosure may be applied to a glass melting process in the vitrification of radioactive waste using a cold crucible. This control method may be used in a method for controlling a power of the power supply 200 of any of the radioactive waste treatment systems described above. The crucible 300 may be a cold crucible 10.

FIG. 16 shows a schematic structural diagram of a cold crucible according to the fourth embodiment of the present disclosure, which includes a cold crucible 10. An induction coil 12 surrounds on the outside of the cold crucible 10, and the induction coil 12 is connected to a power supply (not shown). After a glass 20 and a heating material 30 are added into the cold crucible 10, the power supply of the induction coil 12 may be turned on, so that the induction coil 12 generates an electromagnetic field in the cold crucible. The heating material 30 generates heat or even burns under the action of the electromagnetic field. Under the heating of the heating material 30, the glass 20 begins to melt and forms a glass melt, which may be gradually expanded under the induction heating of the electromagnetic field until the glass 20 is completely melted. During this glass melting process, the power of the power supply to the induction coil 12 may be controlled.

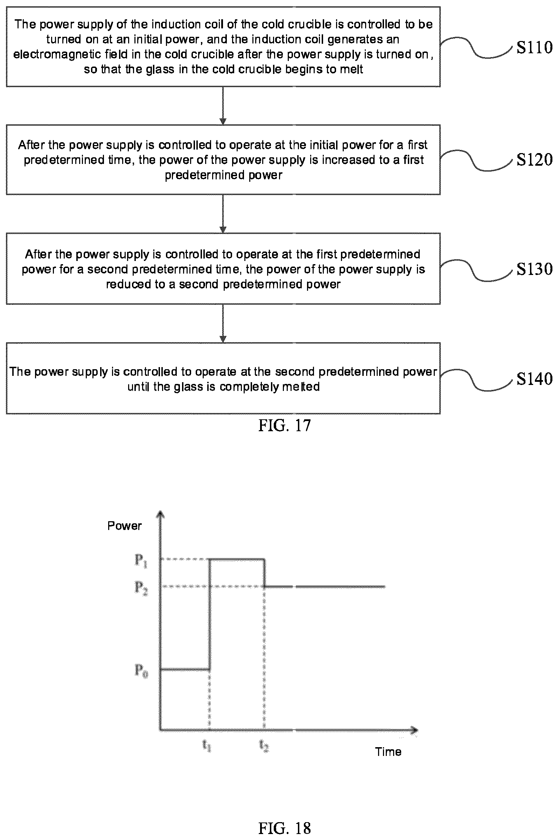

FIG. 17 shows a flowchart of a method for controlling a power according to the fourth embodiment of the present disclosure. As shown in FIG. 17, the method in this embodiment may include the following steps.

In step S110, the power supply of the induction coil of the cold crucible is controlled to be turned on at an initial power, and the induction coil generates an electromagnetic field in the cold crucible after the power supply is turned on, so that the glass in the cold crucible begins to melt.

Specifically, the power supply may be a high-frequency power supply for providing a current to the induction coil 12 so that the induction coil 12 generates an electromagnetic field in the cold crucible 10. Generally, the greater the power of the power supply, the greater the strength of the electromagnetic field generated by the induction coil 12. The power supply of the induction coil 12 of the cold crucible 10 is controlled to be turned on at an initial power P₀, and the induction coil 12 may generate an electromagnetic field of an initial strength in the cold crucible 10. Under the electromagnetic field, the heating material 30 in the cold crucible 10 is heated by induction to burn, and the generated heat may heat the glass in contact with the heating material 30, so that the glass begins to melt and a certain glass melt is formed. Furthermore, the formed glass melt may also be heated by induction and gradually expanded under the electromagnetic field. The initial power P₀ may be selected according to a property of the heating material, a property of the glass, and other conditions. A specific value of the initial power P₀ is not limited in this embodiment.

In step S120, after the power supply is controlled to operate at the initial power to a first predetermined time, the power of the power supply is increased to a first predetermined power.

After the power supply is turned on at the initial power P₀, the power supply is controlled to operate at the initial power P₀ to a first predetermined time t₁, and then the power of the power supply is increased to a first predetermined power P₁.

Optionally, the first predetermined time t₁ may be determined based on a melting rate of the glass 20 in the cold crucible 10. When the power supply operates at the initial power P₀, the heating material 30 is heated to burn so that the glass begins to melt. When the heating material 30 is completely burned out, no heat is provided to the glass, and the glass may only be melted under the induction heating of the electromagnetic field, then the melting rate of the glass may be significantly reduced. Furthermore, the initial power P₀ of the power supply at this time is not suitable for the glass melting, and the melting rate of the glass may gradually decrease. In order to expand the glass melt and rapidly melt the glass to reduce a time of the entire glass melting process, the power of the power supply may be increased after the power supply is controlled to operate at the initial power to the first predetermined time. The first predetermined time t₁ may be determined according to the melting rate of the glass in the cold crucible 10.

Specifically, when the power supply operates at the initial rate P₀ until the melting rate of the glass is less than or equal to a preset rate threshold, the power of the power supply may be increased to the first predetermined power P₁. That is, when the power supply operates to the first predetermined time t₁, the melting rate of the glass is less than or equal to the preset rate threshold. At this time, the power of the power supply is increased to be suitable for the glass melting, so as to accelerate the melting rate of the glass. It should be noted that the preset rate threshold and the first predetermined power P₁ may be appropriately selected according to actual production requirements, and the preset rate threshold and the first predetermined power are not limited in this embodiment.

In step S130, after the power supply is controlled to operate at the first predetermined power to a second predetermined time, the power of the power supply is reduced to a second predetermined power.

When the power of the power supply is increased to the first predetermined power P₁, the power supply is controlled to operate at the first predetermined power P₁ to a second predetermined time t₂, and then the power of the power supply is reduced to a second predetermined power P₂.

Optionally, the second predetermined time t₂ may be determined based on the temperature of the glass melt in the cold crucible 10. When the power supply operates at the first predetermined power P₁, the glass in the cold crucible 10 is continuously melted to form a glass melt, and the temperature of the glass melt is continuously increased. In order to prevent the temperature of the glass melt in the cold crucible 10 from being too high, the power of the power supply may be reduced to slow down the melting rate of the glass, so that the temperature of the glass melt in the cold crucible 10 does not continue to rise.

Specifically, when the power supply operates at the first predetermined power P₁ until the temperature of the glass melt is greater than or equal to a preset temperature threshold, the power of the power supply may be reduced to the second predetermined power P₂. That is, when the power supply operates to the second predetermined time t₂, the temperature of the glass melt is greater than or equal to the preset rate threshold. At this time, the power of the power supply is reduced to slow down the melting rate of the glass and prevent the temperature of the glass melt from too high. It should be noted that the preset temperature threshold and the second predetermined power P₂ may be appropriately selected according to a design parameter of the cold crucible and actual production requirements, and the preset temperature threshold and the second predetermined power are not limited in this embodiment.

In step S140, the power supply is controlled to operate at the second predetermined power until the glass is completely melted.

When the power of the power supply is reduced to the second predetermined power P₂, the power supply may be controlled to operate at the second predetermined power P₂ until the glass 20 in the cold crucible 10 is completely melted to complete the glass melting process.

In some embodiments, the second predetermined power is greater than the initial power. When the power supply operates at the initial power P₀, it is mainly used for induction heating of the heating material in the cold crucible 10. By setting the second predetermined power P₂ to be greater than the initial power P₀, the power of the power supply may be higher and suitable for glass melting, so as to melt the glass at a greater rate while preventing the temperature of the glass melt from being too high.

With the method for controlling the power of the induction coil in this embodiment, the power supply does not continuously operate at a high power during the glass melting process, so that a power consumption may be reduced. Moreover, the power supply does not continuously operate at a low power, so that the glass melting time and the power consumption may be balanced, and the glass melting process in the cold crucible may be completed in a shorter time with less power consumption, then the melting of the radioactive waste to be treated may be started.

It should be noted that any method may be used to increase the power of the power supply to the first predetermined power P₁.

Optionally, increasing the power of the power supply to the first predetermined power may include: directly adjusting the power of the power supply to the first predetermined power, or gradually increasing the power of the power supply to the first predetermined power. If the power of the power supply is gradually increased to the first predetermined power, any method may be used to control the power of the power supply to gradually increase. For example, the power of the power supply may be stepped up to the first predetermined power, or the power of the power supply may be linearly increased to the first predetermined power at a first rate.

Likewise, any method may be used to reduce the power of the power supply to the second predetermined power P₂.

Optionally, reducing the power of the power supply to the second predetermined power may include: directly adjusting the power of the power supply to the second predetermined power, or gradually reducing the power of the power supply to the second predetermined power. If the power of the power supply is gradually reduced to the first predetermined power, any method may be used to control the power of the power supply to be gradually reduced. For example, the power of the power supply may be stepped down to the second predetermined power, or the power of the power supply may be linearly decreased to the second predetermined power at a second rate.

In some embodiments, the heating material used in the glass melting process may be thermite or graphite material.

It should be noted that the method for controlling a power in this embodiment may be used not only in the melting process of glass raw material, but also in the melting process of glass body. The glass body is a glass body formed by cooling and solidification of the glass raw material or the glass raw material and the radioactive waste to be treated due to a loss of the heating source after the glass raw material or the glass raw material and the radioactive waste to be treated is melted in the cold crucible.

FIG. 18 shows a schematic diagram of a first power variation with time according to the fourth embodiment of the present disclosure. As shown in FIG. 18, the method for controlling a power in this embodiment includes the following steps.

In step S111, the power supply of the induction coil of the cold crucible is controlled to be turned on at the initial power P₀, and the induction coil generates an electromagnetic field in the cold crucible after the power supply is turned on, so that the glass in the cold crucible begins to melt.

In step S121, after the power supply is controlled to operate at the initial power P₀ to the first predetermined time t₁, the power of the power supply is directly adjusted to the first predetermined power P₁.

In step S131, after the power supply is controlled to operate at the first predetermined power P₁ to the second predetermined time t₂, the power of the power supply is directly adjusted to the second predetermined power P₂.

In step S141, the power supply is controlled to operate at the second predetermined power P₂ until the glass is completely melted.

Specifically, the power supply is firstly controlled to be turned on at the initial power P₀, for example, 50 kW, and then the power supply is controlled to operate at the initial power P₀ to the first predetermined time. The first predetermined time t₁ may be determined according to the melting rate of the glass in the cold crucible, for example, may be 20 minutes. After the power supply operates to the first predetermined time t₁, the power of the power supply is directly adjusted to the first predetermined power P₁, which may be selected according to the operating parameter of the cold crucible, the glass property, etc., for example, may be 120 kW. Then, the power supply is controlled to operate at the first predetermined power P₁ to the second predetermined time. The second predetermined time t₂ may be determined according to the temperature of the glass melt in the cold crucible, for example, may be 60 minutes. Next, the power of the power supply is directly adjusted to the second predetermined power P₂, which may be selected according to the operating parameter of the cold crucible, the glass property, the temperature of the glass melt and other conditions, for example, may be 90 kW. Finally, the power supply is controlled to operate at the second predetermined power P₂ until the glass in the cold crucible is completely melted.

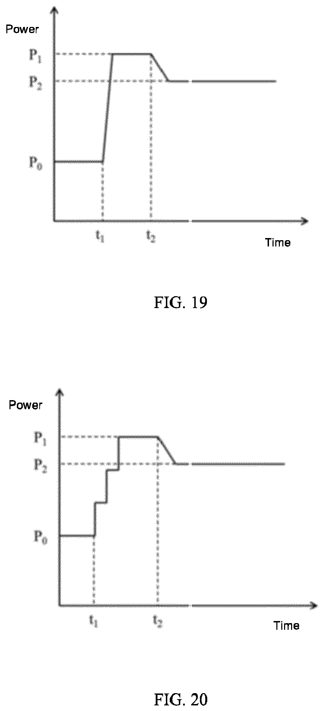

FIG. 19 shows a schematic diagram of a second power variation with time according to the fourth embodiment of the present disclosure. As shown in FIG. 19, the method for controlling a power in this embodiment includes the following steps.

In step S112, the power supply of the induction coil of the cold crucible is controlled to be turned on at the initial power P₀, and the induction coil generates an electromagnetic field in the cold crucible after the power supply is turned on, so that the glass in the cold crucible begins to melt.

In step S122, after the power supply is controlled to operate at the initial power P₀ to the first predetermined time t₁, the power of the power supply is linearly increased to the first predetermined power P₁ at the first rate.

Specifically, after the power supply operates to the first predetermined time, the power of the power supply may be controlled to linearly increase from the initial power P₀ to the first predetermined power P₁, and the power may be increased at the first rate, e.g., 10 kW/min. It should be noted that the first rate may be set according to actual production requirement and operating parameter of the cold crucible, and is not limited in this embodiment.

In step S132, after the power supply is controlled to operate at the first predetermined power P₁ to the second predetermined time t₂, the power of the power supply is linearly reduced to the second predetermined power P₂ at the second rate.

Specifically, when the power supply operates to the second predetermined time, the power of the power supply may be controlled to be linearly reduced from the first predetermined power P₁ to the second predetermined power P₂, and the power may be reduced at the second rate, e.g., 5 kW/min. It should be noted that the second rate may be set according to actual production requirement and operating parameter of the cold crucible, and the second rate may be the same as the first rate or different from the first rate, which is not limited in this embodiment.

In step S142, the power supply is controlled to operate at the second predetermined power P₂ until the glass is completely melted.

Other processes in this embodiment are the same as those in the first embodiment, and details are not repeated here.

FIG. 20 shows a schematic diagram of a third power variation with time according to the fourth embodiment of the present disclosure. As shown in FIG. 20, the difference between the power control method in this embodiment and that in the second embodiment consists in that, in step S122, a different method is used to increase the power of the power supply to the first predetermined power.

After the power supply is controlled to operate at the initial power P₀ to the first predetermined time t₁, the power of the power supply is stepped up to the first predetermined power P₁. Specifically, after the power supply operates to the first predetermined time, the power of the power supply is controlled to be stepped up from the initial power P₀ to the first predetermined power P₁. The power of the power supply may be controlled to increase by a predetermined value every predetermined time period, for example, by 20 kW every 2 minutes. It should be noted that the predetermined time period and the predetermined value may be set according to actual production requirement, operating parameter of the cold crucible and other conditions. In addition, in different time periods, the predetermined value for increase may be the same or different, which is not limited in this embodiment.

Other processes in this embodiment are the same as those in the second embodiment, and details are not repeated here.

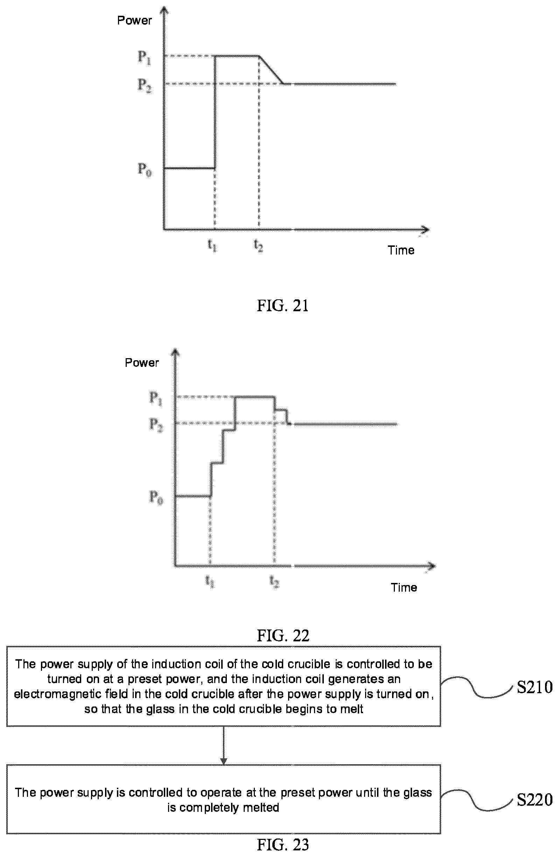

FIG. 21 shows a schematic diagram of a fourth power variation with time according to the fourth embodiment of the present disclosure. As shown in FIG. 21, the difference between the power control method in this embodiment and that in the first embodiment consists in that, in step S131, a different method is used to reduce the power of the power supply to the second predetermined power.

After the power supply is controlled to operate at the first predetermined power P₁ to the second predetermined time t₂, the power of the power supply is linearly reduced to the second predetermined power P₂ at the second rate. Specifically, after the power supply operates to the second predetermined time t₂, the power of the power supply may be controlled to be linearly reduced from the first predetermined power P₁ to the second predetermined power P₂. The power may be reduced at the second rate, e.g., 5kW/min. It should be noted that the second rate may be set according to actual production requirement, operating parameter of the cold crucible and other conditions, which is not limited in this embodiment.

Other processes in this embodiment are the same as those in the first embodiment, and details are not repeated here.

FIG. 22 shows a schematic diagram of a fifth power variation with time according to the fourth embodiment of the present disclosure. As shown in FIG. 22, the method for controlling a power in this embodiment includes the following steps.

In step S115, the power supply of the induction coil of the cold crucible is controlled to be turned on at the initial power P₀, and the induction coil generates an electromagnetic field in the cold crucible after the power supply is turned on, so that the glass in the cold crucible begins to melt.

In step S125, after the power supply is controlled to operate at the initial power P₀ to the first predetermined time t₁, the power of the power supply is stepped up to the first predetermined power P₁.

In step S135, after the power supply is controlled to operate at the first predetermined power P₁ to the second predetermined time t₂, the power of the power supply is stepped down to the second predetermined power P₂.

Specifically, after the power supply operates to the second predetermined time, the power of the power supply is controlled to be stepped down from the first predetermined power P₁ to the second predetermined power P₂. The power of the power supply may be controlled to be reduced by a predetermined value every predetermined time period, for example, by 10 kW every 3 minutes. It should be noted that the predetermined time period and the predetermined value may be set according to actual production requirement, operating parameter of the cold crucible and other conditions. In addition, in different time periods, the predetermined value for reduction may be the same or different, which is not limited in this embodiment.

In step S145, the power supply is controlled to operate at the second predetermined power P₂ until the glass is completely melted.

Other processes in this embodiment are the same as those in the third embodiment, and details are not repeated here.

### Fifth Embodiment

A method for controlling a power provided by the embodiment of the present disclosure may be applied to a glass melting process in the vitrification of radioactive waste using a cold crucible. This control method may be used in a method for controlling a power of the power supply 200 of any of the radioactive waste treatment systems described above. The crucible 300 may be a cold crucible 10. FIG. 23 shows a flowchart of a method for controlling a power according to the fifth embodiment of the present disclosure. As shown in FIG. 23, the method for controlling a power in this embodiment specifically includes the following steps.

In step S210, the power supply of the induction coil of the cold crucible is controlled to be turned on at a preset power, and the induction coil generates an electromagnetic field in the cold crucible after the power supply is turned on, so that the glass in the cold crucible begins to melt.

In step S220, the power supply is controlled to operate at the preset power until the glass is completely melted.

Specifically, after a glass and a heating material are added into the cold crucible 10, the power supply of the induction coil 12 of the cold crucible may be controlled to be turned on at the preset power. The induction coil 12 may generate an electromagnetic field of a preset strength in the cold crucible. The heating material is heated by induction to burn and generate heat under the action of the electromagnetic field. The generated heat may heat the glass in contact with the heating material 30, so that the glass begins to melt and a certain glass melt is formed. Moreover, the preset power is also suitable for melting the glass, and the formed glass melt may also be heated by induction and gradually expand under the electromagnetic field. The power of the power supply is controlled to continuously operate at the preset power until the glass in the cold crucible is completely melted, then the glass melting process may be completed, and the melting of the radioactive waste to be treated may be started.

The preset power may be determined based on at least one of a property of the heating material, an addition amount of the heating material, or a property of the glass. With the same addition amount, different heating materials may generate different heat and thus may melt different mass of glass. Different heat is required for melting glass with different properties. By determining the preset power according to the property of the heating material, the addition amount of the heating material and the property of the glass, the glass in the cold crucible may be completely melted under the preset power.

In this embodiment, the power supply is controlled to continuously operate at the preset power until the glass in the cold crucible is completely melted, so that the time required for glass melting may be reduced. Furthermore, during the glass melting process, the operator does not need to adjust the power of the power supply, so that labor costs may be reduced. With the method for controlling a power of this embodiment, the melting process of the glass in the cold crucible may be performed in a shorter time with less manual intervention.

In some embodiments, the heating material may be a thermite or a graphite material. The thermite contains a first metal and an oxide of a second metal mixed in proportion, and the first metal is more active than the second metal in nature. The first metal may include one of aluminum, magnesium and titanium, and the oxide of the second metal may include one of ferric oxide, ferric tetroxide and copper oxide. In this embodiment, the types of the first metal and the oxide of the second metal are not limited. In other embodiments, other types of metals and metal oxides may also be used. For example, the oxide of the second metal may also be chromium trioxide or manganese dioxide. In addition, when the first metal and the oxide of the second metal are mixed in proportion, they may be mixed with a stoichiometric coefficient of the thermite during the thermite reaction as a molar ratio. Certainly, in other embodiments, other ratios may also be used.

When the thermite is used as the heating material, there is no need to input oxygen into the cold crucible, the thermite may be gradually heated to combustion under the action of the electromagnetic field, and a thermite reaction occurs. The thermite reaction may generate a large amount of heat, so that the glass in contact with the thermite begins to melt and a certain glass melt is formed. In this embodiment, the thermite is used as the heating material. The thermite is a good conductor of a magnetic induction, which has a weak dependence on a strong magnetic field and may be placed in a wide magnetic field zone, so that the heating material may be heated by induction to heat and melt the glass without strictly controlling a placement position of the heating material in the cold crucible.

In some embodiments, the graphite material may include a graphite sheet, a graphite ring, or a graphite ball. When the graphite material is used as the heating material, the graphite material is gradually heated to combustion under the action of the electromagnetic field, and the generated heat may melt the glass in contact with the graphite material and a glass melt begins to form.

It should be noted that the thermite used in this embodiment may be in granular and/or powdered form, and the graphite material may be a plurality of small-sized graphite balls. Due to the small size, the heating material may be added into the cold crucible through a feeding port 13 opened on a cover body 11 of the cold crucible 10, without completely disassembling the cold crucible. The operation is simple, and an operation process may be greatly reduced. In addition, when a plurality of graphite balls are used as the heating material, compared with a large-sized material such as a graphite ring of the same mass, the plurality of graphite balls may be gradually heated to combustion under the action of the electromagnetic field and the air in the cold crucible without inputting oxygen into the cold crucible, and the operation is simple.

In some embodiments, the glass 20 in the cold crucible 10 may be a glass raw material or a glass body. The glass body is a glass body formed by cooling and solidification of the glass raw material or the glass raw material and the radioactive waste to be treated due to a loss of the heating source after the glass raw material or the glass raw material and the radioactive waste to be treated is melted in the cold crucible. During the glass solidification process, it may have to stop due to failure, power failure or other causes. At this time, the glass raw material in the cold crucible may have not been completely melted, or the glass raw material and the radioactive waste to be treated have not been completely melted, or the glass raw material and the radioactive waste to be treated that are not completely melted remain in the cold crucible. Due to the loss of the heating source, the material in the cold crucible is cooled and solidified to form a glass body, and it is difficult to re-melt the glass body. The method for controlling a power in this embodiment may be used not only in a process of melting the glass raw material, but also a process of melting the glass body.

For the embodiments of the present disclosure, it should also be noted that, in the case of no conflict, the embodiments of the present disclosure and the features in the embodiments may be combined with each other to obtain additional embodiments.

The above are only specific embodiments of the present disclosure, but the scope of protection of the present disclosure is not limited thereto. The scope of protection of the present disclosure is determined by the scope of protection of the claims.

## Claims

1. A system for treating a radioactive waste, comprising a calcining device and a melting system, wherein the melting system comprises a crucible (300) and a power supply (200), the calcining device is configured to receive a radioactive waste and calcine and transform the radioactive waste to obtain a material, the crucible (300) is configured to receive the obtained material and a glass base material and melt the obtained material and the glass base material to form a molten glass, and the power supply (200) is configured to supply an electrical energy to the crucible (300),
wherein the system for treating a radioactive waste further comprises a connecting assembly (400), wherein the power supply (200) is electrically connected to a power supply connecting part (210) provided with a first opening (211), the crucible (300) is electrically connected to a crucible connecting part (310) provided with a second opening (311), and the connecting assembly (400) comprises:
a connector (410) passing through the first opening (211) and the second opening (311), wherein the connector (410) has a first end protruding from a side of the first opening (211) away from the second opening (311) and a second end (412) protruding from a side of the second opening (311) away from the first opening (211); and
at least one eccentric wheel (420), wherein each of the at least one eccentric wheel (420) is rotatably connected to one of the first end (411) and the second end (412), a rotation of each of the at least one eccentric wheel (420) together with the other one of the first end (411) and the second end (412) allows a detachable connection between the power supply connecting part (210) and the crucible connecting part (310), and a connection between the power supply connecting part (210) and the crucible connecting part (310) allows a transfer of the electrical energy of the power supply (200) to the crucible (300).

2. The system according to claim 1, further comprising a power switching device (100), wherein the power switching device (100) comprises:
a support member (110) configured to support at least two power supplies (200);
and
a driving member (120) configured to drive the support member (110) to move, so as to adjust positions of the at least two power supplies (200), wherein any one of the power supplies (200) has a position corresponding to the crucible (300) through a movement of the support member (110), and the power supply (200) in the position corresponding to the crucible (300) is configured to supply an electrical energy to the crucible (300).

3. The system according to claim 2, wherein the power switching device (100) further comprises:
a mounting member (130) configured to mount the support member (110) and the driving member (120), wherein the driving member (120) is configured to drive the support member (110) to move relative to the mounting member (120).

4. The system according to claim 3, wherein,
each of the power supplies (200) has a first end close to the crucible (300), and the first end of the power supply (200) in the position corresponding to the crucible (300) is electrically connected to the crucible (300) to provide the electrical energy.

5. The system according to claim 4, wherein,
each of the power supplies (200) further has a second end away from the crucible (300), and a distance between the first ends of at least two adjacent power supplies (200) is less than a distance between the second ends.

6. The system according to claim 3, wherein the mounting member (130) comprises:
a bottom plate (131);
a first side plate (132) extending upward from an edge of the bottom plate (131) close to the crucible (300); and
a second side plate (133) extending upward from an edge of the bottom plate (131) away from the crucible (300);
wherein the first side plate (132) and the second side plate (133) is configured to limit a moving direction of the support member (110).

7. The system according to claim 6, wherein the bottom plate (131) comprises a first edge and a second edge, and an arrangement direction of the first edge and the second edge is perpendicular to an arrangement direction of the first side plate (132) and the second side plate (133); and the mounting member (130) further comprises:
a mounting plate (134) extending upward from one of the first edge and the second edge, and configured to mount the driving member (120).

8. The system according to claim 7, wherein,
the mounting plate (134) is connected to the first side plate (132) and the second side plate (133).

9. The system according to claim 7, wherein the mounting member (130) further comprises:
a stopper plate extending upward from the other one of the first edge and the second edge, and configured to limit a moving distance of the support member (110) in the arrangement direction of the first edge and the second edge.

10. The system according to claim 6, wherein,
the support member (110) is mounted to the mounting member (130) by being carried on the first side plate (132) and the second side plate (133).

11. The system according to claim 10, wherein,
at least one of the power supplies (200) has a portion located directly above the first side plate (132) and/or the second side plate (133).

12. The system according to claim 2, wherein at least one of the power supplies (200) comprises:
at least one anti-skid pad arranged at a bottom of the power supply (200) to reduce a sliding friction between the power supply (200) and the support member (110).

13. The system according to claim 1, wherein one of the first end (411) and the second end (412) that is rotatably connected to each of the at least one eccentric wheel (420) is provided with a fixing hole, and the connecting assembly (400) further comprises:
a rotating shaft (430) fixed to the fixing hole and rotatably connected to each of the at least one eccentric wheel (420), so as to allow a rotation connection between each of the at least one eccentric wheel (420) and one of the first end (411) and the second end (412).

14. The system according to claim 13, wherein,
the at least one eccentric wheel (420) comprises a plurality of eccentric wheels (420) extending in an axial direction of the rotating shaft (430).

15. The system according to claim 14, wherein the connecting assembly (400) further comprises:
a first fixing member (440) fixedly connected to each of the eccentric wheels (420);
a force-bearing structure (450) fixedly connected to the first fixing member (440) and configured to receive an external force for rotating the first fixing member (440), wherein a rotation of the first fixing member (440) allows a rotation of each of the eccentric wheels (420).

## Patentansprüche

1. System zum Behandeln von radioaktivem Abfall, umfassend eine Kalzinierungsvorrichtung und ein Schmelzsystem, wobei das Schmelzsystem einen Schmelztiegel (300) und eine Energieversorgung (200) umfasst, die Kalzinierungsvorrichtung dazu konfiguriert ist, radioaktiven Abfall aufzunehmen und den radioaktiven Abfall zu kalzinieren und umzuwandeln, um ein Material zu erzielen, der Schmelztiegel (300) dazu konfiguriert ist, das erzielte Material und ein Material auf Glasbasis aufzunehmen und das erzielte Material und das Material auf Glasbasis zu schmelzen, um eine Glasschmelze zu bilden, und die Energieversorgung (200) dazu konfiguriert ist, den Schmelztiegel (300) mit elektrischer Energie zu versorgen,
wobei das System zum Behandeln von radioaktivem Abfall ferner eine Verbindungbaugruppe (400) umfasst, wobei die Energieversorgung (200) mit einem Energieversorgungsverbindungteil (210), das mit einer ersten Öffnung (211) versehen ist, elektrisch verbunden ist, der Schmelztiegel (300) mit einem Schmelztiegelverbindungteil (310), das mit einer zweiten Öffnung (311) versehen ist, elektrisch verbunden ist, und die Verbindungbaugruppe (400) umfasst:
ein Verbindungsstück (410), das durch die erste Öffnung (211) und die zweite Öffnung (311) hindurch geht, wobei das Verbindungsstück (410) ein erstes Ende, das von einer Seite der ersten Öffnung (211) von der zweiten Öffnung (311) aus vorsteht, und ein zweites Ende (412), das von einer Seite der zweiten Öffnung (311) von der ersten Öffnung (211) aus vorsteht, aufweist; und
mindestens eine Exzenterscheibe (420), wobei jede der mindestens einen Exzenterscheibe (420) mit einem von dem ersten Ende (411) und dem zweiten Ende (412) drehbar verbunden ist, eine Drehung jeder von der mindestens einen Exzenterscheibe (420) zusammen mit dem anderen von dem ersten Ende (411) und dem zweiten Ende (412) eine abnehmbare Verbindung zwischen dem Energieversorgungsverbindungteil (210) und dem Schmelztiegelverbindungsteil (310) ermöglicht, und eine Verbindung zwischen dem Energieversorgungsverbindungsteil (210) und dem Schmelztiegelverbindungsteil (310) eine Übertragung der elektrischen Energie von der Energieversorgung (200) auf den Schmelztiegel (300) ermöglicht.

2. System nach Anspruch 1, ferner umfassend eine Energieschaltvorrichtung (100), wobei die Energieschaltvorrichtung (100) umfasst:
ein Trägerelement (110), das dazu konfiguriert ist, mindestens zwei Energieversorgungen (200) zu tragen; und
ein Ansteuerelement (120), das dazu konfiguriert ist, das Trägerelement (110) anzusteuern, damit es sich bewegt, um die Positionen der mindestens zwei Energieversorgungen (200), wobei eine beliebige der Energieversorgungen (200) eine Position aufweist, die dem Schmelztiegel (300) entspricht, über eine Bewegung des Trägerelements (110) anzupassen, und die Energieversorgung (200) in der Position, die dem Schmelztiegel (300) entspricht, dazu konfiguriert ist, den Schmelztiegel (300) mit elektrischer Energie zu versorgen.

3. System nach Anspruch 2, wobei die Energieschaltvorrichtung (100) ferner umfasst:
ein Montageelement (130), das dazu konfiguriert ist, das Trägerelement (110) und das Ansteuerelement (120) zu montieren, wobei das Ansteuerelement (120) dazu konfiguriert ist, das Trägerelement (110) anzusteuern, damit es sich im Verhältnis zum Montageelement (120) bewegt.

4. System nach Anspruch 3, wobei jede der Energieversorgungen (200) ein erstes Ende in der Nähe des Schmelztiegels (300) aufweist, und das erste Ende der Energieversorgung (200) in der Position, die dem Schmelztiegel (300) entspricht, mit dem Schmelztiegel (300) elektrisch verbunden ist, um elektrische Energie bereitzustellen.

5. System nach Anspruch 4, wobei jede der Energieversorgungen (200) ferner ein zweites Ende von dem Schmelztiegel (300) entfernt aufweist, und ein Abstand zwischen den ersten Enden von mindestens zwei angrenzenden Energieversorgungen (200) kleiner als ein Abstand zwischen den zweiten Enden ist.

6. System nach Anspruch 3, wobei das Montageelement (130) umfasst:
eine Bodenplatte (131);
eine erste Seitenplatte (132), die sich von einer Kante der Bodenplatte (131) in der Nähe des Schmelztiegels (300) nach oben erstreckt; und
eine zweite Seitenplatte (133), die sich von einer Kante der Bodenplatte (131), die von dem Schmelztiegel (300) entfernt ist, nach oben erstreckt;
wobei die erste Seitenplatte (132) und die zweite Seitenplatte (133) dazu konfiguriert sind, eine Bewegungsrichtung des Trägerelements (110) zu begrenzen.

7. System nach Anspruch 6, wobei die Bodenplatte (131) eine erste Kante und eine zweite Kante umfasst, und eine Anordnungsrichtung der ersten Kante und der zweiten Kante zu einer Anordnungsrichtung der ersten Seitenplatte (132) und der zweiten Seitenplatte (133) rechtwinklig ist; und das Montageelement (130) ferner umfasst:
eine Montageplatte (134), die sich von einer von der ersten Kante und der zweiten Kante aus nach oben erstreckt und dazu konfiguriert ist, das Ansteuerelement (120) zu montieren.

8. System nach Anspruch 7, wobei die Montageplatte (134) mit der ersten Seitenplatte (132) und der zweiten Seitenplatte (133) verbunden ist.

9. System nach Anspruch 7, wobei das Montageelement (130) ferner umfasst:
eine Anschlagplatte, die sich von der anderen von der ersten Kante und der zweiten Kante nach oben erstreckt und dazu konfiguriert ist, einen Bewegungsabstand des Trägerelements (110) in der Anordnungsrichtung der ersten Kante und der zweiten Kante zu begrenzen.

10. System nach Anspruch 6, wobei das Trägerelement (110) an dem Montageelement (130) montiert wird, indem es auf der ersten Seitenplatte (132) und der zweiten Seitenplatte (133) getragen wird.

11. System nach Anspruch 10, wobei mindestens eine der Energieversorgungen (200) einen Abschnitt aufweist, der sich direkt über der ersten Seitenplatte (132) und/oder der zweiten Seitenplatte (133) befindet.

12. System nach Anspruch 2, wobei mindestens eine der Energieversorgungen (200) umfasst:
mindestens eine rutschfeste Unterlage, die auf einem Boden der Energieversorgung (200) angeordnet ist, um eine Gleitreibung zwischen der Energieversorgung (200) und dem Trägerelement (110) zu reduzieren.

13. System nach Anspruch 1, wobei eines von dem ersten Ende (411) und dem zweiten Ende (412), das mit jeder von der mindestens einen Exzenterscheibe (420) drehbar verbunden ist, mit einem Befestigungsloch versehen ist, und die Verbindungbaugruppe (400) ferner umfasst:
eine Drehwelle (430), die an dem Befestigungsloch befestigt ist und mit jeder von der mindestens einen Exzenterscheibe (420) drehbar verbunden ist, um eine Drehverbindung zwischen jeder von der mindestens einen Exzenterscheibe (420) und einem von dem ersten Ende (411) und dem zweiten Ende (412) zu ermöglichen.

14. System nach Anspruch 13, wobei die mindestens eine Exzenterscheibe (420) eine Vielzahl von Exzenterscheiben (420) umfasst, die sich in einer axialen Richtung der Drehwelle (430) erstrecken.

15. System nach Anspruch 14, wobei die Verbindungbaugruppe (400) ferner umfasst:
ein erstes Befestigungselement (440), das mit jeder der Exzenterscheiben (420) fest verbunden ist;
eine Kraft tragende Struktur (450), die mit dem ersten Befestigungselement (440) fest verbunden ist und dazu konfiguriert ist, eine externe Kraft zum Drehen des ersten Befestigungselements (440) aufzunehmen, wobei eine Drehung des ersten Befestigungselements (440) eine Drehung jeder der Exzenterscheiben (420) ermöglicht.

## Revendications

1. Système pour traiter un déchet radioactif, comprenant un dispositif de calcination et un système de fusion, dans lequel le système de fusion comprend un creuset (300) et une alimentation électrique (200), le dispositif de calcination est configuré pour recevoir un déchet radioactif et calciner et transformer le déchet radioactif afin d'obtenir un matériau, le creuset (300) est configuré pour recevoir le matériau obtenu et un matériau à base de verre et faire fondre le matériau obtenu et le matériau à base de verre afin de former un verre fondu, et l'alimentation électrique (200) est configurée pour fournir une énergie électrique au creuset (300),
dans lequel le système pour traiter un déchet radioactif comprend en outre un ensemble de raccordement (400), dans lequel l'alimentation électrique (200) est électriquement raccordée à une partie de raccordement d'alimentation électrique (210) prévue avec une première ouverture (211), le creuset (300) est électriquement raccordé à une partie de raccordement de creuset (310) prévue avec une seconde ouverture (311), et l'ensemble de raccordement (400) comprend :
un connecteur (410) passant à travers la première ouverture (211) et la seconde ouverture (311), dans lequel le connecteur (410) a une première extrémité faisant saillie d'un côté de la première ouverture (211) à l'opposé de la seconde ouverture (311) et une seconde extrémité (412) faisant saillie d'un côté de la seconde ouverture (311) à l'opposé de la première ouverture (211) ; et
au moins une roue excentrique (420), dans lequel chacune de la au moins une roue excentrique (420) est raccordée, en rotation, à l'une parmi la première extrémité (411) et la seconde extrémité (412), une rotation de chacune de la au moins une roue excentrique (420) conjointement avec l'autre parmi la première extrémité (411) et la seconde extrémité (412) permet un raccordement détachable entre la partie de raccordement d'alimentation électrique (210) et la partie de raccordement de creuset (310) et un raccordement entre la partie de raccordement d'alimentation électrique (210) et la partie de raccordement de creuset (310) permet un transfert de l'énergie électrique de l'alimentation électrique (200) au creuset (300).

2. Système selon la revendication 1, comprenant en outre un dispositif de commutation de puissance (100), dans lequel le dispositif de commutation de puissance (100) comprend :
un élément de support (110) configuré pour supporter au moins deux alimentations électriques (200) ; et
un élément d'entraînement (120) configuré pour entraîner l'élément de support (110) pour qu'il se déplace, afin de régler les positions des au moins deux alimentations électriques (200), dans lequel l'une quelconque des alimentations électriques (200) a une position correspondant au creuset (300) par le biais d'un déplacement de l'élément de support (110), et l'alimentation électrique (200) dans la position correspondant au creuset (300) est configurée pour fournir une énergie électrique au creuset (300).

3. Système selon la revendication 2, dans lequel le dispositif de commutation de puissance (100) comprend en outre :
un élément de montage (130) configuré pour monter l'élément de support (110) et l'élément d'entraînement (120), dans lequel l'élément d'entraînement (120) est configuré pour entraîner l'élément de support (110) à se déplacer par rapport à l'élément de montage (120).

4. Système selon la revendication 3, dans lequel :
chacune des alimentations électriques (200) a une première extrémité à proximité du creuset (300), et la première extrémité de l'alimentation électrique (200) dans la position correspondant au creuset (300) est électriquement raccordée au creuset (300) pour fournir l'énergie électrique.

5. Système selon la revendication 4, dans lequel :
chacune des alimentations électriques (200) a en outre une seconde extrémité à l'opposé du creuset (300) et une distance entre les premières extrémités d'au moins deux alimentations électriques (200) adjacentes est inférieure à une distance entre les secondes extrémités.

6. Système selon la revendication 3, dans lequel l'élément de montage (130) comprend :
une plaque inférieure (131) ;
une première plaque latérale (132) s'étendant vers le haut à partir d'un bord de la plaque inférieure (131) à proximité du creuset (300) ; et
une seconde plaque latérale (133) s'étendant vers le haut à partir d'un bord de la plaque inférieure (131) à l'opposé du creuset (300) ;
dans lequel la première plaque latérale (132) et la seconde plaque latérale (133) sont configurées pour limiter une direction de déplacement de l'élément de support (110).

7. Système selon la revendication 6, dans lequel la plaque inférieure (131) comprend un premier bord et un second bord, et une direction d'agencement du premier bord et du second bord est perpendiculaire à une direction d'agencement de la première plaque latérale (132) et de la seconde plaque latérale (133) ; et l'élément de montage (130) comprend en outre :
une plaque de montage (134) s'étendant vers le haut à partir de l'un parmi le premier bord et le second bord et configurée pour monter l'élément d'entraînement (120).

8. Système selon la revendication 7, dans lequel :
la plaque de montage (134) est raccordée à la première plaque latérale (132) et à la seconde plaque latérale (133).

9. Système selon la revendication 7, dans lequel l'élément de montage (130) comprend en outre :
une plaque de butée s'étendant vers le haut à partir de l'autre parmi le premier bord et le second bord, et configurée pour limiter une distance de déplacement de l'élément de support (110) dans la direction d'agencement du premier bord et du second bord.

10. Système selon la revendication 6, dans lequel :
l'élément de support (110) est monté sur l'élément de montage (130) en étant porté sur la première plaque latérale (132) et la seconde plaque latérale (133).

11. Système selon la revendication 10, dans lequel :
au moins l'une des alimentations électriques (200) a une partie située directement au-dessus de la première plaque latérale (132) et/ou de la seconde plaque latérale (133).

12. Système selon la revendication 2, dans lequel au moins l'une des alimentations électriques (200) comprend :
au moins un tampon antidérapant agencé au niveau d'un fond de l'alimentation électrique (200) afin de réduire une friction de glissement entre l'alimentation électrique (200) et l'élément de support (110).

13. Système selon la revendication 1, dans lequel l'une parmi la première extrémité (411) et la seconde extrémité (412) qui est raccordée, en rotation, à chacune de la au moins une roue excentrique (420), est prévue avec un trou de fixation et l'ensemble de raccordement (400) comprend en outre :
un arbre rotatif (430) fixé au trou de fixation et raccordé, en rotation, à chacune de la au moins une roue excentrique (420), afin de permettre un raccordement de rotation entre chacune de la au moins une roue excentrique (420) et l'une parmi la première extrémité (411) et la seconde extrémité (412).

14. Système selon la revendication 13, dans lequel :
la au moins une roue excentrique (420) comprend une pluralité de roues excentriques (420) s'étendant dans une direction axiale de l'arbre rotatif (430).

15. Système selon la revendication 14, dans lequel l'ensemble de raccordement (400) comprend en outre :
un premier élément de fixation (440) fixement raccordé à chacune des roues excentriques (420) ;
une structure de support de force (450) fixement raccordée au premier élément de fixation (440) et configurée pour recevoir une force externe pour faire tourner le premier élément de fixation (440), dans lequel une rotation du premier élément de fixation (440) permet une rotation de chacune des roues excentriques (420).
